# EUROPÄISCHE PATENTANMELDUNG

(11) **EP 1 420 196 A2**
(43) Veröffentlichungstag der Anmeldung: **19.05.2004**
(21) Anmeldenummer: 03026025.1
(22) Anmeldetag: 12.11.2003
(51) Int. Cl.: F16J 15/34

(54) **Sperrdruckdichtung mit Pumpfunktion**

(30) Priorität: 14.11.2002 DE 20217585 U
(71) Anmelder: M.E.F. Financing Establishment, 9491 Ruggell (LI)
(72) Erfinder: Scrivener, Peter c/o Depac Anstalt (Establ.), 9492 Eschen (LI)
(74) Vertreter: Selting, Günther, Dipl.-Ing.

(57) **Zusammenfassung**

Die Sperrdruckdichtung dient zur Abdichtung einer rotierenden Welle (3) gegen ein Gehäuse. Sie weist eine die Welle (3) umgebende an dem Gehäuse (1) anbringbare Brille auf, die einen Zulaufkanal (32) und einen Rücklaufkanal (38) für ein Sperrmedium aufweist. Die das Sperrmedium enthaltende Kammer ist durch Gleitringdichtungen (11,23) gegen den Gehäuseinnenraum und gegen die Umgebung abgedichtet. Ein Zirkulationsweg (32,36,35,37,38) für das Sperrmedium verläuft zwischen einem Zulaufkanal (32) und einem Rücklaufkanal (38). Im Zentralbereich (33) zwischen den beiden Gleitringdichtungen (11,23) weist die Brille (15) eine glatte konische Pumpkanalwand (34) zur Förderung des Sperrmediums auf. Dadurch entsteht eine Pumpe, die die Zentrifugalkraft ausnutzt. Auf einfache Weise wird eine Pumpwirkung vom Zulauf zum Ablauf der Gleitringdichtung erzielt.

## Beschreibung

Die Erfindung betrifft eine Sperrdruckdichtung zur Abdichtung einer rotierenden Welle gegenüber einer Gehäusewand und insbesondere die Förderung des Sperrmediums.

Eine Gleitringdichtung weist im allgemeinen einen stationären Gleitring auf, der z.B. mit einer flanschartigen Brille drehfest an dem Gehäuse befestigt wird, und einen dynamischen Gleitring, der drehfest mit der Welle befestigt wird und mit dieser rotiert. An einer Gleitfläche liegen die beiden Gleitringe aneinander an und bewirken dort die Abdichtung zwischen den stationären und den dynamischen Teilen der Gleitringdichtung. Die Gleitringe sind beispielsweise mit Federn gegeneinander vorgespannt, um einen kräftigen Andruck und damit eine gute Dichtwirkung zu erzielen.

Bei Sperrdruckdichtungen wird innerhalb der Gleitringdichtung ein Druck mit Hilfe eines Sperrmediums, wie beispielsweise Öl, aufgebaut, der einem auf der Gleitringdichtung lastenden Druck entgegenwirkt. Gleichzeitig dient das Sperrmedium zur Wärmeabfuhr und Schmierung der Gleitringdichtung. Üblicherweise sind Sperrdruckdichtungen als sogenannte Doppel-Gleitringdichtungen mit einer inneren und einer äußeren Gleitringdichtung ausgeführt.

Eine derartige Doppel-Gleitringdichtung ist in DE 29800616 offenbart. Sie weist zwei Gleitringdichtungen auf, wobei eine innere Gleitringdichtung den Gehäuseinnenraum gegenüber der Welle abdichtet und eine äußere Gleitringdichtung die Umgebung gegen die Welle abdichtet. Der Zulauf und Rücklauf des Sperrmediums findet in der Brille zwischen den beiden Gleitringdichtungen statt. Das Sperrmedium wird im Bereich der äußeren Gleitringdichtung mit Hilfe einer an einer Hülse ausgebildeten schraubenförmigen Pumpnut und einer die Pumpnut umgebenden Pumpkanalwand gefördert.

Der neuen Erfindung liegt die Aufgabe zugrunde, eine für schnell-laufende Wellen geeignete Doppelgleitringdichtung mit einer verbesserten Förderungsmöglichkeit des Sperrdruckmediums bei gleichzeitiger vereinfachter Konstruktion zu schaffen.

Diese Aufgabe wird erfindungsgemäß mit den Merkmalen des Anspruchs 1 gelöst.

Die Erfindung schlägt eine Doppel-Gleitringdichtung vor, deren Brille im Bereich zwischen den beiden Gleitringdichtungen eine konische Pumpkanalwand zur Förderung des Sperrmediums aufweist. Mit dieser konischen Fläche wird innerhalb der Dichtung eine Pumpwirkung erzielt, die sich die Zentrifugalkraft zu Nutze macht. Durch die Zentrifugalkraft der umlaufenden Welle wird das Sperrmedium nach außen abgeschleudert, wo es auf die Pumpkanalwand auftrifft. Dort wird das Sperrmedium aufgrund der konischen Form der Pumpkanalwand weiterbefördert. Somit wird auf einfache Art und Weise eine Pumpwirkung vom Zulauf zum Ablaß der Gleitringdichtung erzielt. Die erfindungsgemäße Dichtung eignet sich für schnell-laufende Pumpen. Trotz einer sehr kleinen Bauweise, welche es der Dichtung ermöglicht, auch in kleinen Räumen mit kleinen Durchmessern eingesetzt werden zu können, benötigt diese Dichtung keine Schneckenförderung oder separate mechanische Förderung im Zirkulationsweg. Sie eignet sich auch für sogenannte Thermosyphonsysteme, die für Sperrmedien häufig eingesetzt werden, da die gewissermaßen natürliche Zirkulation des Sperrmediums von der Dichtung unterstützt wird.

Vorzugsweise ist der Durchmesser der Pumpkanalwand im Bereich der äußeren Gleitringdichtung größer als im Bereich der inneren Gleitringdichtung, so daß das Sperrmedium von innen nach außen gefördert wird. Dies hat den Vorteil, daß zunächst die kühlere innere Gleitringdichtung von dem Sperrmedium gekühlt wird und erst dann die äußere, die meistens heißer wird, da sie nicht von außen gekühlt werden kann. So kann das auf der Innenseite der Doppelgleitringdichtung geringfügig erwärmte Sperrmedium auch noch die äußere Gleitringdichtung effizient kühlen.

Gemäß einer bevorzugten Ausführungsform der Erfindung beginnt die Pumpkanalwand in Höhe des statischen Gleitrings der inneren Gleitringdichtung, wodurch das Sperrmedium unbehindert an der innen liegenden Seite der inneren Gleitringdichtung zirkulieren kann. Das andere Ende der Pumpkanalwand erstreckt sich hingegen bis etwa zur Gleitfläche der äußeren Gleitringdichtung, so daß das Sperrmedium direkt zu der Gleitfläche gefördert wird. Oftmals weist der stationäre Gleitring einen Hinterschnitt auf, dann kann sich die Pumpkanalwand auch nur bis zum inneren, das heißt der Brille zugewandten, Anfang des Hinterschnitts erstrecken, was für eine Zirkulation des Sperrmedium im Bereich der äußeren Gleitringdichtung ausreichend ist.

Die dynamischen Gleitringe können an einer auf die Welle aufschiebbaren Hülse befestigt sein, was die Montage erheblich vereinfacht. Des weiteren kann die Hülse im Bereich der inneren Gleitringdichtung eine Einlaßausnehmung aufweisen, die außerhalb, das heißt vor dem inneren Ende der Pumpkanalwand beginnt und sich bis unter die Pumpkanalwand fortsetzen kann. Diese Einlaßausnehmung verbessert das Einströmen des Sperrmedium in einen zwischen Pumpkanalwand und Hülse gebildeten Pumpkanal. Es kann auch noch eine Auslaßausnehmung in der Hülse vorgesehen sein, die innerhalb der Pumpkanalwand beginnt und sich auch bis aus der Pumpkanalwand heraus fortsetzen kann. Die Auslaßausnehmung erleichtert das Ausströmen des Sperrmediums aus dem Pumpkanal. Die beiden Ausnehmungen erleichtern zusätzlich die Montage der Hülse innerhalb der Brille.

Zur Verbessern des Förderverhaltens können die Ausnehmungen konisch ausgebildet sein, vorzugsweise parallel zu der Pumpkanalwand. Dadurch kann das Abschleudern des Sperrmediums verbessert werden. Mittels der Auslaßausnehmung oder gegebenenfalls noch weiterer zwischen der Einlaßausnehmung und der Auslaßausnehmung angeordneten Ausnehmungen kann die Breite des Pumpkanals abschnittsweise angepaßt werden, um die Pumpwirkung zu beeinflussen.

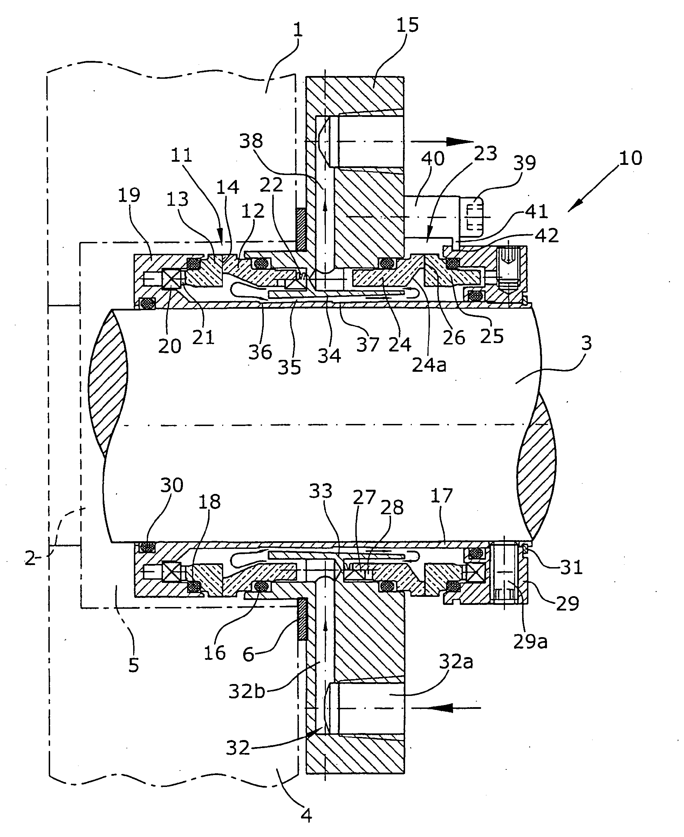

Im folgenden wird ein Ausführungsbeispiel der Erfindung anhand der Zeichnung näher erläutert, wobei Fig. 1 einen Längsschnitt durch die Sperrdruckdichtung zeigt.

Gemäß Fig. 1 weist ein druckdichtes Gehäuse 1 einen Wellendurchgang 2 auf, durch das eine rotierende Welle 3 verläuft. Ausgehend von der Außenfläche 4 des Gehäuses 1 verläuft ein Aufnahmeraum 5, der die Welle 3 ringförmig umgibt. Eine Sperrdruckdichtung 10 dichtet den Gehäuseinnenraum und die Umgebung gegen die Welle 3 ab. Die Gehäuseaußenwand 4 ist mit einem Dichtring 6 gegenüber der Sperrdruckdichtung 10 abgedichtet.

Die Sperrdruckdichtung 10 ist hier als Doppel-Gleitringdichtung ausgeführt; es können auch andere Dichtungstypen verwendet werden, solange diese als Sperrdruckdichtungen betrieben werden können.

Eine die Welle 3 umgebende innere Gleitringdichtung 11 der Sperrdruckdichtung 10 befindet sich in dem Aufnahmeraum 5, um den Gehäuseinnenraum gegen die Welle 3 abzudichten. Die innere Gleitringdichtung 11 besteht aus einem stationären Gleitring 12 und einem dynamischen Gleitring 13; die beiden Gleitringe 12, 13 treffen in einer Gleitfläche 14 aufeinander, die die Dichtfläche zwischen ortsfesten und rotierenden Teilen bildet.

Der stationäre Gleitring 12 greift in eine die Welle 3 umgebende Brille 15 ein, die mittels mehrerer nicht gezeigter Schrauben mit der Außenfläche 4 des Gehäuses 1 verbunden ist. Der stationäre Gleitring 12 ist axial beweglich in der Brille 15 gelagert und mit einem Dichtring 16 gegen die Brille 15 abgedichtet. Zur Drehsicherung weist der stationäre Gleitring 12 einen Schlitz auf, in den ein Vorsprung der Brille 15 eingreift.

Der dynamische Gleitring 13 ist an einer auf der Welle 3 sitzenden Hülse 17 mit geringem radialen Spiel befestigt und mit einem Dichtring 18 gegen die Hülse 17 abgedichtet. Zur Drehsicherung des dynamischen Gleitringes 13 gegenüber der Welle 3 greift ein in einem radial abstehenden Bereich 19 der Hülse 17 eingesetzter Bolzen 20 in einen Schlitz 21 des dynamischen Gleitringes 13 ein. Mehrere über den Umfang verteilte Federn 22 stützen sich an der Brille 15 ab und pressen den stationären Gleitring 12 an der Gleitfläche 14 mit dem dynamischen Gleitring 13 zusammen.

An der Außenseite der Brille 15 ist eine äußere Gleitringdichtung 23 angeordnet, die im Aufbau im wesentlichen symmetrisch zu der inneren Gleitringdichtung 11 ist. So weist auch die äußere Gleitringdichtung 23 einen stationären Gleitring 24 und einen dynamischen Gleitring 25 auf, die zusammen eine Gleitfläche 26 bilden.

Der stationäre Gleitring 24 der äußeren Gleitringdichtung 23 ist ebenso wie der stationäre Gleitring 12 der inneren Gleitringdichtung 11 an der Brille 15 befestigt. Zur Verdrehsicherung greift ein an der Brille 15 befestigter Bolzen 27 in einen Schlitz 28 des stationären Gleitringes 24 ein. Die beiden Gleitringe 24, 25 der äußeren Gleitringdichtung 23 sind ebenfalls mit Federn gegeneinander vorgespannt.

Der dynamische Gleitring 25 der äußeren Gleitringdichtung 23 ist an einem ringförmigen Aufsatz 29 befestigt, der mit der Hülse 17 verbunden ist. Die Hülse 17 erstreckt sich durchgängig über die gesamte Länge der Gleitringdichtung 10. An der Innenseite ist die Hülse 17 mit einem Dichtring 30 gegen den Gehäuseinnenraum abgedichtet. An der Außenseite weist die Hülse 17 mehrere über den Umfang verteilte Löcher auf, durch die jeweils eine Setzschraube 29a des ringförmigen Aufsatzes 29 gegen die Welle verschraubt wird, so daß der ringförmige Aufsatz 29 auf der Welle 3 fixiert ist. Mit einem Sprengring 31, der den ringförmigen Aufsatz 29 mit der Hülse 17 verbindet, wird die Hülse 17 axial an der Welle 3 gesichert.

Die Brille 15 weist einen Zulaufkanal 32 für das Sperrmedium auf. Der Zulaufkanal 32 hat einen mit einem Gewinde versehenen Bereich 32a, der sich von der dem Gehäuse 1 abgewandten Stirnseite der Brille 15 ausgehend, in bezüglich der Welle 3 axialer Richtung in die Brille 15 erstreckt. Dieser Bereich geht in einen radial verlaufenden Bereich 32b des Zulaufkanals 32 über, dessen anderes Ende sich im Zentralbereich 33 der Brille befindet, wobei der Zentralbereich 33 sich axial in der Mitte zwischen den beiden stationären Gleitringen 12, 24 befindet. Von dort gelangt das Sperrmedium in einen Spalt, der von der inneren Gleitringdichtung 11 und der Hülse 17 begrenzt wird. Weiterhin bewegt sich das Sperrmedium zwischen dem zentralen Bereich 33 der Brille und der Hülse 17 hindurch.

In dem zentralen Bereich 33 ist in der Brille 15 eine Pumpkanalwand 34 ausgebildet, die sich in axialer Richtung etwa von der Mitte des stationären Gleitrings 12 der inneren Gleitringdichtung 11 bis zu einem Hinterschnitt 24a des stationären Gleitrings 24 der äußeren Gleitringdichtung 23 erstreckt. Die Pumpkanalwand 34 ist konisch ausgebildet, wobei sich der Durchmesser in Richtung der äußeren Gleitringdichtung 23 vergrößert.

Zwischen der Pumpkanalwand 34 und der Hülse 17 wird ein Pumpkanal 35 gebildet, durch den das Sperrmedium von der inneren Gleitringdichtung 11 zu der äußeren Gleitringdichtung 23 in Pfeilrichtung gefördert wird.

In der Hülse 17 ist vor dem inneren Ende der Pumpkanalwand 34 eine Einlaßausnehmung 36 ausgebildet. Diese Einlaßausnehmung 36 beginnt etwa in der Mitte des stationären Gleitrings 12 der inneren Gleitringdichtung 11 und setzt sich bis etwa zur Mitte der Pumpkanalwand 34 fort. Am Ende der Einlaßausnehmung 36 erreicht die Hülse 17 wieder ihren ursprünglichen Durchmesser. Die Einlaßausnehmung 36 ist wie die Pumpkanalwand 34 konisch ausgebildet und zwar mit dem gleichen Winkel, so daß die Flächen der Pumpkanalwand 34 und der Einlaßausnehmung 36 parallel verlaufen.

Am Ende der Einlaßausnehmung 36 beginnt eine Auslaßausnehmung 37, die fast bis zum äußeren Ende der Pumpkanalwand 34 verläuft. Die Fläche der Auslaßausnehmung 37 ist ebenfalls parallel zu der Fläche der Pumpkanalwand 34.

Nachdem das Sperrmedium aus dem Zulaufkanal 32 ausgetreten ist, zirkuliert es zunächst in Pfeilrichtung an der inneren Gleitringdichtung 11 entlang. Durch die umlaufende Welle 3 wird das Sperrmedium mitgenommen, so daß sich eine schraubenförmige Bewegung des Sperrmediums ergibt. Nun gelangt das Sperrmedium über die Einlaßausnehmung 36 in den Pumpkanal 35. Dort wird es aufgrund der Zentrifugalkraft der Welle 3 von dieser abgeschleudert und trifft auf die konische Pumpkanalwand 34 auf. Hier wird das Sperrmedium nach außen, also in Richtung der äußeren Gleitringdichtung 23 gedrückt. Im Bereich der Auslaßausnehmung 37 ist der Querschnitt des Pumpkanals 35 erweitert, so daß das Sperrmedium ungehindert aus dem Pumpkanal 35 unter die äußere Gleitringdichtung 23 austreten kann, wo das Sperrmedium zur Kühlung zirkuliert, bevor es über einen Rücklaufkanal 38, der wie der Zulaufkanal 32 ausgebildet ist, die Sperrdruckdichtung 10 verläßt. In dem beschriebenen Zirkulationsweg 32, 36, 35, 37 und 38 strömt das Sperrmedium zur Abführung von Wärme und zur Schmierung der Gleitringdichtungen 11 und 23.

Durch die Pumpkanalwand 34 und die Einlaß- und Auslaßausnehmungen 36, 37 wird eine integrierte Pumpwirkung erzielt, die das Sperrmedium durch die Sperrdruckdichtung zirkulieren läßt; so kann auf externe Pumpmittel zumindest weitgehend verzichtet werden. Die erzielte Pumpwirkung hängt neben der Drehzahl der Welle 3 und der Größe der Dichtung auch von der Größe des Pumpkanals 35 ab. Die Größe kann durch den Abstand der Pumpkanalwand 34 zu der Hülse 17 und durch die Ausgestaltung der Ausnehmungen 36, 37 variiert werden.

Bei der Montage der Sperrringdichtung 10 wird diese einfach auf die Welle 3 aufgeschoben und die stationären Teile der Sperrdruckdichtung 10 mit der Brille 15 werden an dem Gehäuse 1 befestigt. Zur Befestigung der dynamischen Teile der Sperrdruckdichtung 10 werden die Setzschrauben 30 angezogen. Um während des Transports und während der Montage eine Dejustierung der Sperrdruckdichtung 10 zu verhindern, sind an der Außenseite der Brille 15 Justierschrauben 39 angebracht. Jede Justierschraube 39 sichert eine Justierhülse 40, die einen radial abstehenden Vorsprung 41 aufweist. Ist die Justierschraube 39 gelöst, kann die Justierhülse 40 gedreht werden, so daß der Vorsprung 41 in eine ringförmige Nut 42 des ringförmigen Aufsatzes 29 eingreift und somit die innere Gleitringdichtung 11 und die äußere Gleitringdichtung 23 unter der gewünschten Vorspannung sichert. Nachdem die Sperrdruckdichtung 10 sowohl an dem Gehäuse 1 als auch an der Welle 3 befestigt ist, können die Justierschrauben 39 gelöst und die Vorsprünge 41 aus dem Eingriff herausgedreht werden. Die Justierhülsen 40 werden zur späteren Wiederverwendung mit dem Vorsprung 41 von der Nut 42 abgewandt wieder an der Brille 15 festgeschraubt.

## Patentansprüche

1. Sperrdruckdichtung mit Pumpwirkung, die zur Abdichtung einer rotierenden Welle (3) gegen ein Gehäuse (1) an diesem befestigbar ist, mit einer die Welle (3) umgebenden, an dem Gehäuse (1) anbringbaren Brille (15), die einen Zulaufkanal (32) und einen Rücklaufkanal (38) für ein Sperrmedium aufweist, einer die Welle (3) gegen den Gehäuseinnenraum abdichtenden inneren Gleitringdichtung (11) und einer die Welle (3) gegen die Umgebung abdichtenden äußeren Gleitringdichtung (23), wobei jede Gleitringdichtung (11, 23) zwei gegeneinander vorgespannte Gleitringe (12, 13; 24, 25) aufweist und wobei ein Zirkulationsweg (32, 36, 35, 37, 38) für das Sperrmedium zwischen den Kanälen (32, 38) und entlang der Gleitringdichtungen (11, 23) verläuft,
**dadurch gekennzeichnet,**
**daß** die Brille (15) im Zentralbereich (33) zwischen den beiden Gleitringdichtungen (11, 23) eine sich in Strömungsrichtung erweiternde glatte konische Pumpkanalwand (34) zur Förderung des Sperrmediums aufweist.

2. Sperrdruckdichtung nach Anspruch 1, **dadurch gekennzeichnet, daß** der Durchmesser der Pumpkanalwand (34) in Richtung der äußeren Gleitringdichtung (23) zunimmt.

3. Sperrdruckdichtung nach Anspruch 1 oder 2, **dadurch gekennzeichnet, daß** die Pumpkanalwand (34) sich von dem statischen Gleitring (12) der inneren Gleitringdichtung (11) bis zu einer zwischen dem statischen Gleitring (24) und dem dynamischen Gleitring (25) gebildeten Gleitfläche (26) der äußeren Gleitringdichtung (23) erstreckt.

4. Sperrdruckdichtung nach einem der Ansprüche 1 bis 3, **dadurch gekennzeichnet, daß** die Pumpkanalwand (34) sich bis zu einem Hinterschnitt (24a) des stationären Gleitrings (24) der äußeren Gleitringdichtung (23) erstreckt.

5. Sperrdruckdichtung nach einem der Ansprüche 1-4, **dadurch gekennzeichnet, daß** die an der Welle (3) anbringbaren dynamischen Gleitringe (13, 25) an einer auf die Welle (3) aufschiebbaren Hülse (17) angebracht sind, die durch die Brille (15) hindurchragt und eine der Pumpkanalwand (34) gegenüberliegende generell zylindrische Außenfläche hat.

6. Sperrdruckdichtung nach Anspruch 5, **dadurch gekennzeichnet, daß** die Hülse (17) im Bereich der inneren Gleitringdichtung (11) eine Einlaßausnehmung (36) aufweist, die außerhalb der Pumpkanalwand (34) beginnt.

7. Sperrdruckdichtung nach Anspruch 5 oder 6, **dadurch gekennzeichnet, daß** die Hülse (17) eine Auslaßausnehmung (37) aufweist, die innerhalb der Pumpkanalwand (34) beginnt.

8. Sperrdruckdichtung nach Anspruch 6 oder 7, **dadurch gekennzeichnet, daß** die Einlaßausnehmung (36) und/oder die Auslaßausnehmung (37) konisch ausgebildet sind.

9. Sperrdruckdichtung nach Anspruch 8, **dadurch gekennzeichnet, daß** die Flächen der Pumpkanalwand (34) und der Einlaßausnehmung (36) und/oder der Auslaßausnehmung (37) parallel verlaufen.

10. Sperrdruckdichtung nach einem der Ansprüche 1-9, **dadurch gekennzeichnet, dass** die Pumpkanalwand (34) einen Durchmesser hat, der kleiner ist als die Innendurchmesser der Gleitringe.
